# EUROPEAN PATENT SPECIFICATION

(11) **EP 1 128 627 B1**
(45) Date of publication and mention of the grant of the patent: **02.08.2006**
(21) Application number: 00301316.6
(22) Date of filing: 21.02.2000
(51) Int. Cl.: H04L 29/06

(54) **Apparatus and method for establishing communication in a computer network**
Vorrichtung und Verfahren zur Herstellung einer Verbindung in einem Rechnernetzwerk
Dispositif et procédé d'établissement des communications dans un réseau informatique

(43) Date of publication of application: 29.08.2001
(73) Proprietor: International Business Machines Corporation, Armonk, NY 10504 (US); SIEMENS AKTIENGESELLSCHAFT, 80333 München (DE)
(72) Inventor: Eibach, Wolfgang, c/o IBM United Kingdom Ltd., Winchester, Hamphire SO21 2JN (GB); Knobl, Karl-Heinz, c/o IBM United Kingdom Ltd., Winchester, Hamphire SO21 2JN (GB); Menzenbach, Christof, c/o IBM United Kingdom Ltd., Winchester, Hamphire SO21 2JN (GB); Nuttall, Mark Patrick, c/o IBM United Kingdom Ltd., Winchester, Hamphire SO21 2JN (GB); Phippen, Robert W., c/o IBM United Kingdom Ltd., Winchester, Hamphire SO21 2JN (GB)
(74) Representative: Jennings, Michael John

(56) References cited:
- WO-A-98/59506
- WO-A-99/09766
- WO-A-99/22576
- US-A- 5 675 507
- KENNEDY P: "MobileWebchanging the face of mobile networking through universal wireless connectivity" NORTHCON CONFERENCE RECORD,US,NEW YORK, IEEE, 4 November 1996 (1996-11-04), pages 89-94, XP002128907 ISBN: 0-7803-3278-4

## Description

### FIELD OF INVENTION

The present invention relates to apparatus and a method for establishing communications between a client computer and a server computer via a network such as the Internet or an intranet, the establishment of communications being initiated from a second client computer remote from the first client computer.

### BACKGROUND

The present invention is well adapted to use Internet communications. As is well known, the Internet is a network of computer networks having no single owner or controller and including large and small, public and private networks, and in which any connected computer running Internet Protocol software is, subject to security controls, capable of exchanging information with any other computer which is also connected to the Internet. This composite collection of networks which have agreed to connect to one another relies on no single transmission medium (for example, bidirectional communication can occur via satellite links, fiberoptic trunk lines, telephone lines, cable TV wires and local radio links).

The World Wide Web Internet service ('Web' hereafter) is a wide area information retrieval facility which provides access to an enormous quantity of network-accessible information. Information about the World Wide Web can be found in "Spinning the Web" by Andrew Ford (International Thomson Publishing, London 1995) and "The World Wide Web Unleashed" by John December and Neil Randall (SAMS Publishing, Indianapolis 1994). Use of the Web is growing at an explosive rate because of its combination of flexibility, portability and ease-of-use, coupled with interactive multimedia presentation capabilities. The Web allows any computer connected to the Internet and having the appropriate software and hardware configuration to retrieve any document that has been made publicly available anywhere on the Internet. The retrievable documents on the Web include 'HyperMedia' documents - i.e. documents which may be text documents or other forms of media such as sounds and images and which may have links ('hyperlinks' - see below) to other documents. The format of such documents on the Web is a standard format in HTML (HyperText Markup Language), such that a document created on one operating system and hardware platform can be read by a user on any other platform that has an appropriate Web Browser (see below). HTML is associated with a specific communication protocol known as HyperText Transfer Protocol (http). Images may be stored in separate graphics files, for example in standard GIF or JPEG format, which are referenced in the HTML text for retrieval with the HTML text.

Users access this information using a 'Web Browser', which is software installed on the user's computer having facilities for connecting to a Web server via the Internet and for retrieving documents from the Web server and presenting them. A Web server in this context is a computer program which provides services (serving requested HTML pages or files) in response to requests from other 'client' computer programs; a Web server computer is a computer running a Web server program. Currently available Web Browsers include Netscape Navigator from Netscape Communications Corporation and Internet Explorer from Microsoft Corporation. Such Browsers understand HTML and other Web standard formats and can display or output files correctly in these formats. The Web is structured as pages or files which each have a particular Universal Resource Locator (or URL). The URL is an address reference which denotes, amongst other things, both the server machine and the particular file or page on that machine. A user can type in particular URLs or jump from one page to an associated page by means of 'hyperlinks' - that is, a word or symbol on a page can be associated with a URL for another page which is selectable to cause the Browser to send a request which retrieves, and then to display, the relevant page. The preferred user interface for such Browser selection is the graphical 'point-and-click' interface (i.e. links are selected by moving a cursor to a particular word or symbol on a display and then pressing a mouse button). The words, images and symbols having associated hyperlinks are identifiable by a user as "hot spots" (for example, the relevant text may be highlighted or underlined, or the cursor may change its appearance as it passes over the hot spots). There may be many pages resident on a single server, and associated hyperlinked pages may be located on different servers.

Web pages are thus well known to be identifiable through URLs, such as http://www.pc.ibm.com/data.htm. This example illustrates three components of the URL: "http" identifies the protocol to be used by a Web browser for access to the page; "www.pc.ibm.com" identifies the target computer (this computer name is converted to its numeric-form Internet address); and "data.htm" identifies the page to be accessed on that computer. More complex examples having additional parameters are also possible, such that specific data may be passed from the client computer to the server computer in a URL specification.

For security reasons, Web Servers typically require a so-called "firewall" to prevent unauthorised access. A firewall is a set of related programs, located at a network gateway server, that protects the resources of a private network from non-authorised users. An enterprise with an intranet (a private network using Internet protocols) that allows its workers access to the wider Internet installs a firewall to prevent outsiders from accessing its own private data resources and for controlling what outside resources its own users have access to. An intranet can include an "extranet" which is the part of an intranet which is made accessible to authorised business partners.

A firewall, working closely with a router program, filters all network packets to determine whether to forward them toward their destination. A firewall also includes or works with a proxy server that makes network requests on behalf of workstation users. There are a number of known firewall screening methods, such as to screen requests to make sure they come from acceptable (previously identified) domain names and IP addresses. For mobile users, firewalls allow remote access to the private network by the use of secure logon procedures and authentication certificates.

With the increasing provision of electronic information and control units within vehicles, and also in the home, there is a requirement for a mechanism enabling remote computers to be able to access these electronic information and control units. For example, a car rental firm may wish to check the location of or status information relating to each of their cars from a computer at head office, and a car user may wish to set car climate controls from his home computer. Furthermore, there is a requirement for such a mechanism with sufficient security provision to prevent unauthorised access to control units in vehicles or in the home. However, the above-described resource access mechanism of a Web Browser connecting to a Web Server, and the Web Server implementing a firewall, cannot easily be implemented by installing a Web server in a car or in the home. This is because Web Servers require an administrator for ongoing maintenance as well as for initial set-up, and a firewall additionally requires continuous update and maintenance to watch its protocol files for unauthorised access attempts. Implementing a Web Server within a car would have unmanageable security problems. Similar problems exist in any wide area network.

Kennedy P., "MobileWeb - changing the face of mobile networking through universal wireless connectivity", Northcon Conference Record, US, New York, IEEE, 4 November 1996, pages 89-94, describes combining the networking opportunities of the Internet with wireless connectivity and integrating a mobile Web server into a vehicle.

WO 99/09766 describes message waiting notification for mobile devices. A client device is paged when a message is waiting on a server - sending caller identification information to the client. A caller identification device within the client receives the caller identification information, and uses an assigned 'message waiting' telephone number to determine when a message is waiting.

WO 98/59506 describes a method for a traveller to use a telephone system to identify his current location and then to access information relevant to his current location via the Internet or another computer network.

### SUMMARY OF INVENTION

The invention according to a first aspect (claim 1) provides a method for establishing communications between a first client computer and a Web server computer via a network, including the steps of: sending to the Web server computer from a second client computer remote from the first client computer a request for invocation of a communications controller component; in response to receipt of the request at the Web server computer, invoking the communications controller component at the Web server computer to generate and send a message from the Web server computer to the first client computer, the message including an identification of the communications controller component at the Web server computer ; in response to receipt of the message at the first client computer, sending a request using Internet protocols from the first client computer to the communications controller component at the Web server computer, thereby to establish communications between the first client computer and the Web server computer.

In a preferred embodiment of the invention, the network is the Internet or an intranet. The second client computer includes a Web Browser for communicating with Web server software at the server computer and for displaying results to a user. The first client computer also includes software for handling communications with the Web server, and the requests sent to the server computer in response to the message received from the server computer use Internet protocols. Hereafter, the first client computer will be referred to as the 'Web client computer' and communications software at the second client computer will be referred to as the 'Web Browser'.

Thus, according to the preferred embodiment, a Web client computer is triggered to connect to a communication component at the Web server computer, initiated by a conventional interaction between a remote Web Browser and the Web server. The Web Browser request can specify particular required information or operations, causing the Web client to perform specific operations (downloading applets from the Web server if required) and/or to return operation results or information to the Web Browser via the Web server. The invention is particularly advantageous for enabling remote access to a vehicle's electronic control and information systems from a Web Browser without requiring a Web server to be running in the vehicle. The invention is also advantageous for remote access to electronic control and information systems in the home.

A Web client is not exposed to hacking in the way a Web server is, and so implementing a Web client in a vehicle (or in the home) avoids the security concerns that would be associated with running a Web server in the vehicle (or in the home). The Web client computer has control over whether or not to take any action in response to the messages it receives (for example, depending on the identity of the end user at the Browser) and it can control what level of access to its system resources it grants to code which it downloads from the server.

According to a preferred embodiment of the invention, the message sent to the Web client computer by the communications controller component is a short message service (SMS) message whereas the request sent from the client computer to the communications controller component in response to receipt of the SMS message uses Internet protocols. The SMS message is sent to a digital GSM telephone connected to the Web client computer. The acronym GSM stands for Global System for Mobile communication, and SMS is a known message service of the GSM system providing means for transferring short messages with limited length (160 ASCII characters) between mobile stations and a short message service server using the Short Message Transport Protocol (SM-TP). The SMS message preferably includes a URL or other identifier for identifying the communications controller component.

The present invention in a second aspect (claims 18) provides a data communications network including: a first network-connected client computer having installed thereon a decoder component for handling communications received by said first client computer from a Web server computer; a second network-connected client computer having installed thereon a communications component (e.g. a Web Browser) for handling communications with a Web server computer; a network-connected Web server computer having installed thereon a server communications controller component for handling communications between said server computer and said client computers; and wherein the server communications controller component is adapted to respond to a request from said second client computer (e.g. Web Browser requests) directed to said server communications controller component by generating and sending a message to the first client computer which message identifies the server communications controller component, and wherein the decoder component is adapted to respond to said message from the server communications component by causing a client request to be sent using Internet protocols to the server communications controller component at the Web server, thereby to establish communications between the first client computer and the Web server computer.

The present invention in a third aspect (claim 13) provides a set of components for use in a method of establishing client-server data communications between a client computer and a Web server computer within a computer network in response to initiation from a remote Web Browser within the network, the set of components including: a server communications controller component, for running on the Web server computer, adapted to respond to Web Browser requests directed to said server communications controller component by generating and sending messages to the client computer which messages identify the server communications controller component; and a decoder component for running on the client computer to respond to said messages from the server communications component by causing a client request to be sent to the server communications controller component using Internet protocols.

The server component and decoder component according to the invention may each be implemented as a computer program product comprising computer readable program code recorded on a storage medium.

The invention in a fourth and fifth aspects provides an apparatus and a Web server as defined by claims 16 and 19.

### BRIEF DESCRIPTION OF DRAWINGS

A preferred embodiment of the present invention will now be described in more detail, by way of example, with reference to the accompanying drawings in which:
Figure 1 is a schematic representation of a data communication network in which the present invention is implemented according to a first embodiment; and

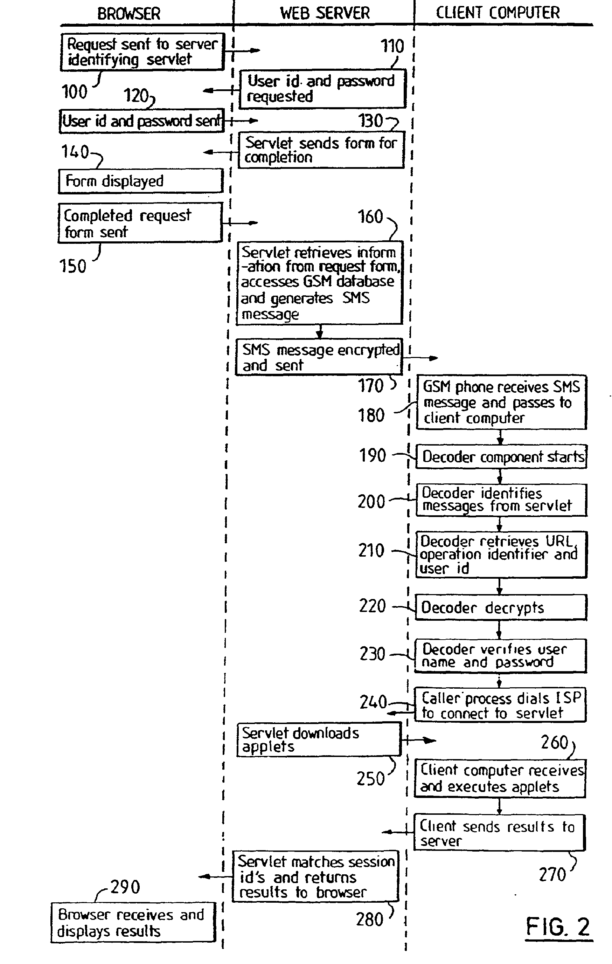

Figure 2 is a representation of the sequence of communication flows and events according to an embodiment of the invention.

### DETAILED DESCRIPTION OF PREFERRED EMBODIMENTS

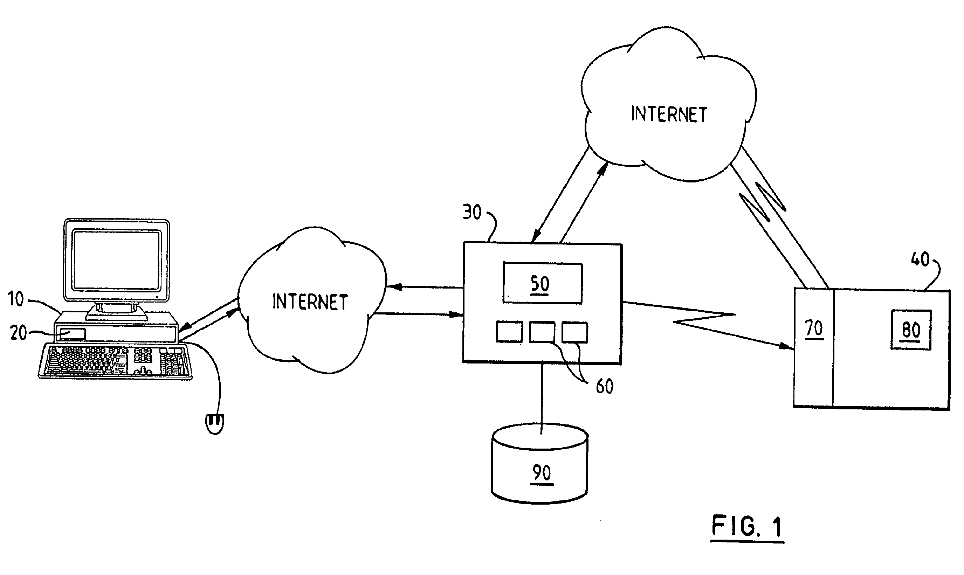

As shown in Figure 1, the present invention according to a first embodiment is implemented in a network of computers including a first computer 10 having standard Web Browser software 20 installed thereon, a second computer 30 comprising a Web server computer, and a third computer 40 installed in a vehicle. The third computer 40 is connected to the vehicle's electronic control and information systems and manages those systems. Known vehicle control and information systems include engine and fuel management systems, navigation, telematic, communication and audio systems, security systems, and climate controls. The vehicle computer 40 may be connected via one or more communications buses to the vehicle's audio system, telephone 70, seat and mirror position controls, air conditioning, navigation system, etc. Each of the computers 10,30,40 are connected to the Internet (the vehicle computer 40 being connected to the Internet via a wireless link using the telephone 70 as receiver and transmitter). Vehicle computer 40 has installed thereon computer program code for sending and receiving communications to and from the Web server computer 30 and code 80 for processing incoming messages, as will be described below.

The Web server computer 30 has installed thereon a "servlet" 50 which is a server-based software component written in the Java programming language. This servlet 50 is a Java class which is referenced by a URL and performs services on the server computer on behalf of clients. The Java servlet 50, when invoked, runs persistently on the Web server computer 30 and supports multi-threading (i.e. multiple concurrent users are possible and a separate thread is created and maintained for each service request - the Web server assigns a session identifier to each new thread and stores this state information persistently to enable communications subsequently sent between the servlet and a client computer to be associated together). The operation of this servlet will be described below. The Web server additionally has a plurality of downloadable Java applets 60 stored thereon, each adapted to perform a different operation when executed by a client computer. It is known in the art for Java-enabled Web servers to support the Java Servlet API, and it is also known that servlets can handle multiple requests concurrently and can perform session tracking for HTTP servers.

An end user wishing to remotely access the vehicle's computer interacts with the Web Browser 20 to cause a request to be sent 100 from the Browser to the Web server 30. This initial request identifies the Java servlet 50. A typical URL to be included within the Web Browser request to reference the servlet 50 is:
http://www.ServerName.com/ServletA

The URL may be embedded in a Web page hyperlink so as to be selectable by the user by clicking the mouse button when the mouse pointer overlays the hyperlink hot spot, or the user may type in the URL via a keyboard.

The servlet 50 responds to this initial request by asking the end user to provide a user identifier (a Web page is sent 110 to the Web Browser for display to the user as a dialog box requiring entry of the user's name and password). The Browser then returns 120 this information to the server. If the user's ID and password are recognised by the server, the server sends 130 to the Browser a second Web page which includes a form for completion. The Browser displays 140 the form to the user via its graphical user interface. The form includes an entry field for entering the licence/registration number of the vehicle to be contacted (or some other identifier for the client computer to be accessed) and includes menu options for specifying operations to be performed or information which is required.

Having entered the registration number and the purpose for which access to the vehicle computer is required, the user selects a "Proceed with request" option and the completed request form is transmitted 150 to the Web server 30 where it is recognised by the servlet 50 as a request for invocation of the servlet.

A new servlet thread is started in response to each invocation request. The servlet generates 160 a short message service (SMS) message for sending to the identified vehicle's GSM telephone, which is connected to the vehicle's computer 40. A telephone number for the vehicle's in car GSM telephone 70 is retrieved by the servlet 50 from a database 90 accessible from the Web server 30 (for example, stored in a peripheral disk storage device) for use in routing the SMS message. The SMS message includes the URL of the servlet 50, an identifier of a required operation to be performed, a session identifier assigned by the servlet 50 and an identifier of the user initiating the communications, to enable subsequent contact by the vehicle's computer 40 to the Web server 30. The SMS messages are encrypted at the server using known techniques, and then sent 170 to the identified GSM telephone.

Generation and transmission of SMS messages and the receipt and decoding of SMS messages by GSM telephones are well known in the art. SMS is a service of all GSM providers which allows short messages to be sent asynchronously to a receiving mobile telephone without the need to make a telephone call connection to that telephone. This "store and forward" service is cheap and efficient for transferring small amounts of information. WO98/11744 discloses sending short messages to and from mobile stations, including short messages containing a URL for identifying a desired Web page.

The vehicle's telephone 70 is connected to the vehicle's computer 40 (via an RS232 connector line), enabling the contents of a received SMS message to be passed 180 to the computer 40. A message arriving at the telephone toggles a line on the RS232 connector which is detected by a low-level device driver on the computer, which in turn triggers higher level software to communicate with the telephone and obtain the message from it as a stream of characters.

A software-implemented decoder component 80 on the vehicle's computer 40 is invoked 190 on receipt of an SMS message to decode their content. Firstly, this interpreter component must determine 200 whether a received SMS message contains a flag identifying itself as sent by the servlet 50. If not, the SMS message is routed to its target application (for example, text is displayed via the telephone's LCD display or is converted to speech and played). If the SMS message was sent by servlet 50, the decoder component 80 retrieves 210 from the message the user identifier, URL, and embedded operation identifier and password (if included) and decrypts them 220 using an appropriate stored decryption key. The decoder component 80 is provided with a register containing decryption keys for a number of authorised users who may initiate encrypted messages being sent and uses these to decrypt encrypted messages.

The decoder component 80 then performs a security check 230 against its own database using the user identifier included in the message (and the password if included), and determines whether to respond positively to the SMS message's request to make a connection to the servlet depending on this user identifier (and password) check. If this check is positive, the decoder component 80 invokes a process for establishing Internet access using the information retrieved from the message.

The telephone number of one or more Internet Service Providers (ISPs) is held by the vehicle's computer (If the vehicle holds only a single ISP number this is preferably for an ISP supporting local call charges regardless of the location of the requester).

The vehicle's computer then uses the telephone to call 240 an Internet service provider to establish a session and connect to the URL specified in the SMS message. The vehicle may have Global Positioning System (GPS) for determining its position and means for deciding which of a number of Internet Service Provider numbers to use based on relative costs, but this is not essential. Thus, the vehicle's Web client computer makes a connection using Internet protocols to the Java servlet 50 which was initially started by the Browser, returning the previously assigned session identifier and user identifier together with the required operation identifier. The vehicle's Web client identifies itself to the servlet by either a password or by its private security key.

Applets 60 which are required at the client computer to perform the specified required operation are then downloaded 250 from the Web server 30 to the vehicle's client computer 40. Thus, program code installed on the vehicle's computer 40 controls retrieval of Java applets from the Web server, to provide the vehicle's computer with functionality for issuing and receiving requests to and from the server's Java servlet 50 and for performing required operations. This dynamic downloading of code to provide required capabilities has the advantages of user flexibility (since new code can be added at any time) and of reducing the amount of code which must be permanently stored at the client computer. If the applets require access to the vehicle's electronic control units then it is desirable for these applets to be encrypted (or at least signed by digital electronic signature) such that only authorised users can make such requests, but encryption is not essential. The client computer then executes 260 the downloaded applets and results are returned 270 to the Web Browser via the servlet on the Web server, with the server matching up 280 session identifiers. The Browser then displays 290 the results to the user.

An example download applet has a method, beginQuery(), which accesses the software infrastructure within the vehicle. For example, the initial method may call:
- o: CarSystems.FuelTank.getLevel() to determine the fuel level;
- o: CarSystems.EngineManagement.getDiagnostics() for engine diagnostics;
- o: CabinSystems.Heating.setTemp(20) to set the in-car air conditioning to 20 degrees C;
- o: CarSystems.EngineManagement.inhibitStart() to inhibit the next attempt to start the engine if the car has been stolen;
- o: CarSystems.GPSmanagement.getPosition() to return the current location of the car from the Global Positioning system; or
- o: CabinSystem.MMIscreen.displayAlert(msg) to display an alert message on a screen in the car, which might direct the driver to call a telephone number, such as to call his own company.

Results of these queries are then processed and returned to the known servlet.

Thus, the remote Web Browser 20 is provided with secure access to the vehicle's client computer 40 via the Internet, using the vehicle's computer to make the Internet connection. This avoids the need for a Web server and firewall to be provided in the vehicle and vests control in the client, thereby improving security and reducing maintenance overheads. To further increase security, the URL's which can be used and/or the numbers for contacting Internet service providers are limited to a specific set of numbers stored in non-volatile storage in the vehicle.

Further examples of the advantages and applications of the present invention include:
- o: enabling downloading to the Web client 40 new capabilities and information - such as adding new route information to a car's navigation system;
- o: enabling a car owner to remotely instruct the car's computer to start recording traffic warnings half an hour before a journey, or to set climate controls;
- o: enabling an authorised repair garage to check a car's diagnostic systems, to determine what repair is necessary before reaching the car;
- o: enabling a car hire company to instruct a car to set itself to the next user's favourite settings (set seat and steering wheel positions, select radio channel, navigation system, Internet Browser, etc), or to check the locations of their cars.

For the above described embodiment of the invention which establishes communications between a mobile client and a server computer from a remote Browser, alternatives to SMS messaging such as wireless LAN or satellite communications are equally possible (although satellite communications are currently very much more expensive than SMS messaging and wireless LAN currently has a very limited range). These alternatives implementations also involve sending a message to the client computer without using Internet protocols (IP), and then the client computer being triggered to submit a request via IP.

Although the preferred embodiment described above relates specifically to use of the invention for providing remote access to a vehicle's computer, the present invention is equally applicable to remote access to a home computer for investigating or controlling electronic control systems in the home.

Example applications and advantages of the invention for access to home electronic control systems include:
- o: checking of security systems;
- o: setting of air conditioning/heating;
- o: setting video recorder.

For home use, the cost savings of SMS messaging are less important since wired communication links may be used instead of mobile links. Any secure transmission which contains the requisite information for contacting the communications controller servlet 50 at the server computer would be acceptable. There would be no need to notify the home computer of the telephone number of an internet service provider, since this will remain fixed unless service providers were to be selected dynamically according to factors such as current charging rates.

The implementation of the present invention using a Java servlet installed on the Web server computer is not essential to the invention, although the known integrated security features and development efficiency of Java are beneficial and the handling of multiple concurrent requests and synchronisation which is possible with servlets are also beneficial. The above described embodiment involves applets being downloaded from the server as required, but in alternative embodiments some or all of this code can be fixed at the client.

Further alternative embodiments include SMS messages which do not include any identification of required operations or specify required information and instead merely identify the user (advantageous for security), the servlet, and the session. The client computer or the servlet must then determine what applets are to be downloaded to the client system based on the session identifier and/or user identifier. However, the SMS message could include more information, such as the telephone number of an ISP (for example, the nearest or cheapest as determined by the server instead of the vehicle's computer if the vehicle's position and call tariffs are known to the server).

## Claims

1. A method for establishing communications between a first client computer (40) and a Web server computer (30) via a network, including the steps of:
sending (100) to the Web server computer from a second client computer (10) remote from the first client computer a request for invocation of a communications controller component (50);
in response to receipt of the request at the Web server computer, invoking the communications controller component at the Web server computer to generate (160) and send (170) a message from the Web server computer to the first client computer, the message including an identification of the communications controller component at the Web server computer;
in response to receipt of the message at the first client computer, sending (240) a request using Internet protocols from the first client Computer to the communications controller component at the Web server computer, thereby to establish communications between the first client computer and the Web server computer.

2. A method according to claim 1 wherein the first client computer is installed in a vehicle and is connected to electronic control and/or information systems within the vehicle, enabling initiation from the second client computer of communications for controlling and/or interrogating the vehicle's electronic control and/or information systems.

3. A method according to claim 1 or claim 2, wherein the request sent from the second client computer specifies a required operation to be performed and/or required information to be retrieved and the message generated in response to receipt of the request from the second client computer includes an identification of the specified operation and/or information, and wherein the method includes the steps, subsequent to establishing communications between the first client computer and the Web server computer, of:
sending information from the first client computer to the Web server computer, and
forwarding said information to the second client computer.

4. A method according to any one of claims 1 to 3, wherein the message sent from the Web server computer to the first client computer is an SMS message generated by the communications controller component, said SMS message being sent to the first client computer via a GSM telephone (70) connected to the first client computer.

5. A method according to claim 1, wherein the message sent from the Web server computer to the first client computer includes a URL identifying the communications controller component.

6. A method according to claim 4, wherein the SMS message includes a URL identifying the communications controller component and wherein a component at the first client computer receives said SMS messages from the Web server computer, analyses the SMS messages to retrieve the respective URL, and uses the URL to generate a request for sending to the communications controller component at the Web server computer.

7. A method according to any one of the preceding claims, wherein the communications controller component at the Web server computer is a Java servlet.

8. A method according to any one of the preceding claims, including the step, subsequent to said request being sent from the first client computer to the Web server computer, of downloading (250) Java applets from the Web server computer for performing at the first client computer operations specified in the request from the second client computer.

9. A method according to claim 1, wherein the request from the second client computer includes an identifier of an end user and/or a password and the message generated at the Web server computer includes said user identifier and/or password, and wherein the method includes performing a determination at the first client computer of whether to establish communications with the Web server computer, said determination being dependent on said user identifier and/or password.

10. A method according to claim 9, including the step of downloading (250) Java applets from the Web server computer for performing operations at the first client computer, the selection of applets to be downloaded being performed at the fist client computer and being dependent on said user identifier and/or password.

11. A method according to claim 4, wherein the generation of the SMS message by the communications controller component includes the step of retrieving 160), from a database accessible from the Web server computer, a GSM telephone number of said GSM telephone.

12. A method according to claim 1, wherein the first client computer is a personal computer connected to electronic control and/or information systems within a user's home, enabling initiation from the second client computer of communications for controlling and/or interrogating the home electronic control and/or information systems.

13. A set of components for use in a method of establishing client-server data communications between a first client computer (40) and a Web server computer (30) within a computer network, in response to initiation from a remote client computer (10) within the network, the set of components including:
a server communications controller component (50) , for running on the Web server computer, adapted to respond to requests directed to said server communications controller component from the remote client computer by generating (160) and sending (170) messages to the first client computer which messages identify the server communications controller component; and
a decoder component (80) for running on the first client computer to respond to said messages from the server communications controller component by causing a client request to be sent (240) to the server communications controller component at the Web server computer using Internet protocols.

14. A set of components according to claim 13, wherein the server communications controller component is adapted to generate (130) a form, for presentation via a graphical user interface of the remote client computer, enabling a user to specify (150) required operations and/or required information to be included within said remote client requests, and wherein the server communications controller component is adapted to include an identification of said specified operations and/or information within said generated messages.

15. A set of components according to claim 14. wherein the decoder component is adapted to retrieve said identification of specified operations and/or information upon receipt of said messages, and wherein the set of components includes a set of applets (60) for storing on the Web server computer such that they are downloadable to the first client computer in response to requests from said first client which include an identification of specified operations and/or information retrieved from said messages.

16. Apparatus for supporting remote access to a client computer, including:
a Web Browser (20) for running on a first Internet- or intranet-connected computer, to control the operation of said first computer;
a Web server communications controller component for running on a Web server computer comprising a second Internet- or intranet-connected computer, to control the operation of said second computer; and
a decoder component (80) for running on a client computer, to control the operation of said client computer;
wherein the Web server communications controller component is adapted to respond to Web Browser requests directed to said Web server communications controller component by generating (160) and sending (170) messages to the client computer which messages identify the Web server communications controller component, and wherein the decoder component is adapted to respond to said messages from the Web server communications controller component by causing a client request to be sent (240) to the Web server communications controller component using Internet protocols, thereby to establish communications between the client computer and the Web server computer.

17. Apparatus according to claim 16 wherein the decoder component is installed on a client computer connected to a vehicle's electronic control and/or information systems, and is adapted to communicate with the Web server computer via a wireless communication link.

18. A data communications network including:
a first network-connected client computer (40) having installed thereon a decoder component (80) for handling communications received by said first client computer from a Web server computer;
a second network-connected client computer (10) having installed thereon a communications component for handling communications with a Web server computer;
a network-connected Web server computer (30) having installed thereon a server communications controller component for handling communications between said Web server computer and said client computers; and
wherein the server communications controller component is adapted to respond to a request from said second client computer directed to said server communications controller component by generating (160) and sending (170) a message to the first client computer which message identifies the server communications controller component, and wherein the decoder component is adapted to respond to said message from the server communications controller component by causing a client request to be sent (240) using Internet protocols to the server communications controller component of the Web server, thereby to establish communications between the first client computer and the Web server computer.

19. A Web server computer (30) for connection within a network, the Web server computer including a server communications controller component for receiving Web Browser requests for invocation of said server communications controller component which requests identify a specific client computer within the network, for generating (160) a message in response to said Web Browser requests which message includes an identification of the server communications controller component and requests the establishment of communications with the server communications controller component, and for sending (170) said message to the identified client computer to trigger the identified client computer to establish communications with the server communications controller component using Internet protocols.

## Patentansprüche

1. Verfahren für das Herstellen einer Datenübertragungsverbindung zwischen einem ersten Clientcomputer (40) und einem Webservercomputer (30) über ein Netzwerk, wobei das Verfahren die folgenden Schritte beinhaltet:
Senden (100) einer Anforderung für den Aufruf einer Datenübertragungssteuerkomponente (50) von dem Webservercomputer an einen zweiten Clientcomputer (10), der sich von dem ersten Clientcomputer entfernt befindet;
als Reaktion auf den Empfang der Anforderung bei dem Webservercomputer Aufrufen der Datenübertragungssteuerkomponente des Webservercomputers, um so eine Nachricht von dem Webservercomputer an den ersten Clientcomputer zu erzeugen (160) und zu senden (170), wobei die Nachricht eine Kennung der Datenübertragungssteuerkomponente des Webservercomputers beinhaltet;
als Reaktion auf den Empfang der Nachricht bei dem ersten Clientcomputer Senden (240) einer Anforderung unter Verwendung von Internetprotokollen von dem ersten Clientcomputer an die Datenübertragungssteuerkomponente des Webservercomputers, um auf diese Weise eine Datenübertragung zwischen dem ersten Clientcomputer und dem Webservercomputer herzustellen.

2. Verfahren nach Anspruch 1, wobei der erste Clientcomputer in einem Fahrzeug eingebaut und mit elektronischen Steuerungs- und/oder Informationssystemen verbunden ist, so dass von dem zweiten Clientcomputer eine Datenübertragung veranlasst werden kann, um die elektronischen Steuerungs- und/oder Informationssysteme des Fahrzeugs zu steuern und/oder abzufragen.

3. Verfahren nach Anspruch 1 oder 2, wobei die von dem zweiten Clientcomputer gesendete Anforderung eine erforderliche Operation, die ausgeführt werden soll, und/oder erforderliche Daten, die abgerufen werden sollen, angibt und wobei die als Reaktion auf den Empfang der Anforderung von dem zweiten Clientcomputer erzeugte Nachricht eine Kennung der angegebenen Operation und/oder der Daten beinhaltet und wobei das Verfahren nach der Herstellung einer Datenübertragungsverbindung zwischen dem ersten Clientcomputer und dem Webservercomputer die folgenden Schritte beinhaltet:
Senden von Daten von dem ersten Clientcomputer an den Webservercomputer und
Weiterleiten der Daten an den ersten Clientcomputer.

4. Verfahren nach einem beliebigen der Ansprüche 1 bis 3, wobei die von dem Webservercomputer an den ersten Clientcomputer gesendete Nachricht eine SMS-Nachricht ist, die von der Datenübertragungssteuerkomponente erzeugt wurde, wobei die SMS-Nachricht über ein mit dem ersten Clientcomputer verbundenes GSM-Telefon (70) an den ersten Clientcomputer gesendet wird.

5. Verfahren nach Anspruch 1, wobei die von dem Webservercomputer an den ersten Clientcomputer gesendete Nachricht eine Verweisadresse (URL) beinhaltet, welche die Datenübertragungssteuerkomponente kenntlich macht.

6. Verfahren nach Anspruch 4, wobei die SMS-Nachricht eine URL beinhaltet, welche die Datenübertragungssteuerkomponente kenntlich macht, und wobei eine Komponente des ersten Clientcomputers die SMS-Nachrichten von dem Webservercomputer empfängt, die SMS-Nachrichten analysiert, um so die betreffende URL zu erhalten, und die URL dazu verwendet, eine Sendeanforderung an die Datenübertragungssteuerkomponente des Webservercomputers zu erzeugen.

7. Verfahren nach einem beliebigen der vorangegangenen Ansprüche, wobei die Datenübertragungssteuerkomponente des Webservercomputers ein Java-Servlet ist.

8. Verfahren nach einem beliebigen der vorangegangenen Ansprüche, das nach dem Senden der Anforderung von dem ersten Clientcomputer an den Webservercomputer den Schritt des Herunterladens (250) von Java-Applets von dem Webservercomputer beinhaltet, um so bei dem ersten Clientcomputer Operationen durchzuführen, die in der Anforderung von dem zweiten Clientcomputer angegeben werden.

9. Verfahren nach Anspruch 1, wobei die Anforderung von dem zweiten Clientcomputer einen Bezeichner eines Endbenutzers und/oder ein Kennwort beinhaltet und wobei die bei dem Webservercomputer erzeugte Nachricht den Benutzerbezeichner und/oder das Kennwort beinhaltet und wobei das Verfahren beinhaltet, bei dem ersten Clientcomputer zu ermitteln, ob eine Datenübertragungsverbindung mit dem Webservercomputer hergestellt werden soll, wobei die Ermittlung abhängig von dem Benutzerbezeichner und/oder Kennwort ist.

10. Verfahren nach Anspruch 9, das den Schritt des Herunterladens (250) von Java-Applets von dem Webservercomputer zur Durchführung von Operationen bei dem ersten Clientcomputer beinhaltet, wobei die Auswahl von herunterzuladenden Applets bei dem ersten Clientcomputer erfolgt und abhängig von dem Benutzerbezeichner und/oder Kennwort ist.

11. Verfahren nach Anspruch 4, wobei die Erzeugung der SMS-Nachricht durch die Datenübertragungssteuerkomponente den Schritt des Abrufens (160) einer GSM-Telefonnummer des GSM-Telefons von einer Datenbank beinhaltet, auf die über den Webservercomputer zugegriffen werden kann.

12. Verfahren nach Anspruch 1, wobei der erste Clientcomputer ein Personal Computer ist, der mit elektronischen Steuerungs- und/oder Informationssystemen in der Wohnung eines Benutzers verbunden ist, so dass von dem zweiten Clientcomputer Datenübertragungen veranlasst werden kann, um die elektronischen Steuerungs- und/oder Informationssysteme der Wohnung zu steuern und/oder abzufragen.

13. Komponentengruppe zur Verwendung bei einem Verfahren für die Herstellung einer Client-Server-Datenübertragungsverbindung zwischen einem ersten Clientcomputer (40) und einem Webservercomputer (30) innerhalb eines Computernetzwerks als Reaktion auf die Auslösung durch einen entfernten Clientcomputer (10) innerhalb des Netzwerks, wobei die Komponentengruppe Folgendes beinhaltet:
eine Server-Datenübertragungssteuerkomponente (50) zur Ausführung auf dem Webservercomputer, die so gestaltet ist, dass sie auf Anforderungen, die von dem entfernten Clientcomputer an die Server-Datenübertragungssteuerkomponente gerichtet werden, reagiert, indem sie Nachrichten an den ersten Clientcomputer erzeugt (160) und sendet (170), wobei die Nachrichten die Server-Datenübertragungssteuerkomponente kenntlich machen; und
eine Decodierungskomponente (80) zur Ausführung auf dem ersten Clientcomputer, um auf die Nachrichten von der Server-Datenübertragungssteuerkomponente zu reagieren, indem unter Verwendung von Internetprotokollen eine Clientanforderung an die Server-Datenübertragungssteuerkomponente des Webservercomputers gesendet (240) wird.

14. Komponentengruppe nach Anspruch 13, wobei die Server-Datenübertragungssteuerkomponente so gestaltet ist, dass sie ein Formular erzeugt (130), das über eine grafische Benutzeroberfläche des entfernten Clientcomputers dargestellt wird, um so einem Benutzer zu ermöglichen, erforderliche Operationen und/oder Daten anzugeben (150), die in den Anforderungen des entfernten Clientcomputers enthalten sein sollen, und wobei die Server-Datenübertragungssteuerkomponente so gestaltet ist, dass sie eine Kennung der angegebenen Operationen und/oder Daten innerhalb der erzeugten Nachrichten beinhaltet.

15. Komponentengruppe nach Anspruch 14, wobei die Decodierungskomponente so gestaltet ist, dass sie die Kennung der angegebenen Operationen und/oder Daten beim Empfang der Nachrichten abruft, und wobei die Komponentengruppe eine Gruppe von Applets (60) zur Speicherung auf dem Webservercomputer beinhaltet, so dass sie als Reaktion auf Anforderungen von dem ersten Clientcomputer auf den ersten Clientcomputer heruntergeladen werden können, die eine Kennung der aus den Nachrichten enthaltenen angegebenen Operationen und/oder Daten beinhalten.

16. Vorrichtung für die Unterstützung des Fernzugriffs auf einen Clientcomputer, die Folgendes beinhaltet:
einen Webbrowser (20) zur Ausführung auf einem ersten mit dem Internet oder einem Intranet verbundenen Computer, um so den Betrieb des ersten Computers zu steuern;
eine Webserver-Datenübertragungssteuerkomponente zur Ausführung auf einem Webservercomputer, die einen zweiten mit dem Internet oder einem Intranet verbundenen Computer umfasst, um so den Betrieb des zweiten Computers zu steuern; und
eine Decodierungskomponente (80) zur Ausführung auf einem Clientcomputer, um so den Betrieb des Clientcomputers zu steuern;
wobei die Webserver-Datenübertragungssteuerkomponente so gestaltet ist, dass sie auf Webbrowser-Anforderungen reagiert, die an die
Webserver-Datenübertragungssteuerkomponente gerichtet sind, indem sie Nachrichten an den Clientcomputer erzeugt (160) und sendet (170), wobei die Nachrichten die Webserver-Datenübertragungssteuerkomponente kenntlich machen und wobei die Decodierungskomponente so gestaltet ist, dass sie auf die Nachrichten von der Webserver-Datenübertragungssteuerkomponente reagiert, indem sie veranlasst, dass eine Clientanforderung unter Verwendung von Internetprotokollen an die Webserver-Datenübertragungssteuerkomponente gesendet (240) wird, um auf diese Weise eine Datenübertragungsverbindung zwischen dem Clientcomputer und dem Webservercomputer herzustellen.

17. Vorrichtung nach Anspruch 16, wobei die Decodierungskomponente auf einem Clientcomputer installiert ist, der mit den elektronischen Steuerungs- und/oder Informationssystemen eines Fahrzeugs verbunden ist, und wobei sie so gestaltet ist, dass sie über eine Funk-Datenübertragungsverbindung mit dem Webservercomputer Daten austauscht.

18. Datenübertragungsnetzwerk, das Folgendes beinhaltet:
einen ersten mit einem Netzwerk verbundenen Clientcomputer (40), auf dem eine Decodierungskomponente (80) installiert ist, um die Übertragungsdaten, die durch den ersten Clientcomputer von einem Webservercomputer empfangen wurden, zu verarbeiten.
einen zweiten mit einem Netzwerk verbundenen Clientcomputer (10), auf dem eine Datenübertragungskomponente installiert ist, um die Datenübertragung mit einem Webservercomputer abzuwickeln;
einen mit einem Netzwerk verbundenen Webservercomputer (30), auf dem eine Server-Datenübertragungssteuerkomponente installiert ist, um die Datenübertragung zwischen dem Webservercomputer und den Clientcomputern abzuwickeln; und
wobei die Server-Datenübertragungssteuerkomponente so gestaltet ist, dass sie auf eine Anforderung von dem zweiten Clientcomputer, die an die Server-Datenübertragungssteuerkomponente gerichtet ist, reagiert, indem sie eine Nachricht an den ersten Clientcomputer erzeugt (160) und sendet (170), wobei die Nachricht die Server-Datenübertragungssteuerkomponente kenntlich macht und wobei die Decodierungskomponente so gestaltet ist, dass sie auf die Nachricht von der Server-Datenübertragungssteuerkomponente reagiert, indem sie veranlasst, dass eine Clientanforderung unter Verwendung von Internetprotokollen an die Server-Datenübertragungssteuerkomponente des Webservers gesendet (240) wird, um auf diese Weise eine Datenübertragungsverbindung zwischen dem ersten Clientcomputer und dem Webservercomputer herzustellen.

19. Webservercomputer (30) zur Verbindung mit einem Netzwerk, wobei der Webservercomputer eine Server-Datenübertragungssteuerkomponente beinhaltet, um Webbrowser-Anforderungen für den Aufruf der Server-Datenübertragungssteuerkomponente zu empfangen, wobei die Anforderungen einen bestimmten Clientcomputer innerhalb des Netzwerks kenntlich machen, um als Reaktion auf die Webbrowser-Anforderungen eine Nachricht zu erzeugen (160), wobei die Nachricht eine Kennung der Server-Datenübertragungssteuerkomponente beinhaltet und die Herstellung einer Datenübertragungsverbindung mit der Server-Datenübertragungssteuerkomponente anfordert, und um die Nachricht an den kenntlich gemachten Clientcomputer zu senden (170), um so den kenntlich gemachten Clientcomputer zu veranlassen, unter Verwendung von Internetprotokollen eine Datenübertragungsverbindung mit der Server-Datenübertragungskomponente herzustellen.

## Revendications

1. Un procédé d'établissement de communications entre un premier ordinateur client (40) et un ordinateur agissant en serveur Web (30) via un réseau, comprenant les étapes consistant à :
envoyer (100) à l'ordinateur agissant en serveur Web, depuis un deuxième ordinateur client (10) distant du premier ordinateur client, une requête d'appel d'un ordinateur contrôleur de communications (50) ;
en réponse à la réception de la requête, à l'ordinateur agissant en serveur Web, appel du composant formant contrôleur de communications sur l'ordinateur agissant en serveur Web, afin de générer (160) et d'envoyer (170) un message, de l'ordinateur agissant en serveur Web au premier ordinateur client, le message comprenant une identification du composant agissant en contrôleur de communications à l'ordinateur agissant en serveur Web ;
en réponse à la réception du message, au premier ordinateur client, envoi (240) d'une requête par utilisation de protocoles Internet du premier ordinateur client au composant formant contrôleur de communications, sur l'ordinateur agissant en serveur Web, de manière à établir des communications entre le premier ordinateur client et l'ordinateur agissant en serveur Web.

2. Un procédé selon la revendication 1, dans lequel le premier ordinateur client est installé dans un véhicule et est connecté à des systèmes de commande et/ou d'information électroniques installés dans le véhicule, permettant, depuis le deuxième ordinateur client, le lancement de communications pour commander et/ou interroger les systèmes de commande et/ou d'information électroniques du véhicule.

3. Un procédé selon la revendication 1 ou la revendication 2, dans lequel la requête envoyée du deuxième ordinateur client spécifie une opération requise devant être accomplie et/ou une information requise devant être récupérée, et le message, généré en réponse à la réception de la requête venant du deuxième ordinateur client, comprend une identification de l'opération et/ou de l'information spécifiée(s), et dans lequel le procédé comprend les étapes, subséquentes à l'établissement des communications entre le premier ordinateur client et l'ordinateur agissant en serveur Web, consistant à :
envoyer de l'information du premier ordinateur client à l'ordinateur agissant en serveur Web, et
transmettre ladite information au deuxième ordinateur client.

4. Un procédé selon l'une quelconque des revendications 1 à 3, dans lequel le message, envoyé de l'ordinateur agissant en serveur Web au premier ordinateur client, est un message SMS généré par le composant agissant en contrôleur de communications, ledit message SMS étant envoyé au premier ordinateur client, via un téléphone GSM (70) connecté au premier ordinateur client.

5. Un procédé selon la revendication 1, dans lequel le message envoyé de l'ordinateur agissant en serveur Web au premier ordinateur client comprend un URL identifiant le composant agissant en contrôleur de communications.

6. Un procédé selon la revendication 4, dans lequel le message SMS comprend un URL identifiant le composant agissant en contrôleur de communications, et dans lequel un composant, sur le premier ordinateur client, reçoit lesdits messages SMS venant dudit ordinateur agissant en serveur Web, analyse les messages SMS, pour récupérer l'URL respective, et utilise l'URL, pour générer une requête pour envoi au composant agissant en contrôleur de communications, à l'ordinateur agissant en serveur Web.

7. Un procédé selon l'une quelconque des revendications précédentes, dans lequel le composant agissant en contrôleur de communications à l'ordinateur agissant en serveur Web est un Java servlet.

8. Un procédé selon l'une quelconque des revendications précédentes, incluant l'étape, subséquente à ladite requête envoyée depuis le premier ordinateur client vers l'ordinateur agissant en serveur Web, de déchargement (250) de Java applets depuis l'ordinateur agissant en serveur Web, pour accomplissement, sur le premier ordinateur client, d'opérations spécifiées dans la requête émanant du deuxième ordinateur client.

9. Un procédé selon la revendication 1, dans lequel la requête émanant du deuxième ordinateur client comprend un identificateur d'un utilisateur final et/ou un mot de passe, et le message, généré sur l'ordinateur agissant en serveur Web, comprend ledit identificateur utilisateur et/ou ledit mot de passe, et dans lequel le procédé comprend l'accomplissement d'une détermination, sur le premier ordinateur client, du fait d'établir des communications avec l'ordinateur agissant en serveur Web, ladite détermination dépendant dudit identificateur utilisateur et/ou dudit mot de passe.

10. Un procédé selon la revendication 9, incluant l'étape de déchargement (250) de Java applets depuis l'ordinateur agissant en serveur Web, pour accomplir des opérations au premier ordinateur client, la sélection des applets devant être déchargés étant accomplie au premier ordinateur client et dépendant dudit identificateur client et/ou dudit mot de passe.

11. Un procédé selon la revendication 4, dans lequel la génération du message SMS, par le composant agissant en contrôleur de communications, comprend l'étape de récupération (160), depuis une base de données accessible depuis l'ordinateur agissant en serveur Web, d'un numéro de téléphone GSM dudit téléphone GSM.

12. Un procédé selon la revendication 1, dans lequel le premier ordinateur client est un ordinateur personnel, connecté à des systèmes de commande et/ou d'information électroniques dans un domicile de l'utilisateur, permettant le lancement, depuis le deuxième ordinateur client, de communications pour commander et/ou interroger les systèmes de commande et/ou d'information électroniques du domicile.

13. Un jeu de composants pour utilisation dans un procédé d'établissement de communications de données client-serveur, entre un premier ordinateur client (40) et un ordinateur agissant en serveur Web (30), dans un réseau informatique, en réponse au lancement, depuis un ordinateur client (10) distant, situé dans le réseau, du jeu de composants incluant :
un composant agissant en contrôleur de communications de serveur (50), pour fonctionnement sur l'ordinateur agissant en serveur Web, adapté pour répondre à des requêtes dirigées vers ledit composant agissant en contrôleur de communications de serveur depuis l'ordinateur client distant, par génération (160) et envoi (170) de messages au premier ordinateur client, lesdits messages identifiant le composant agissant en contrôleur de communications de serveur ; et
un composant décodeur (80), pour fonctionnement sur le premier ordinateur client, afin de répondre auxdits messages venant du composant agissant en contrôleur de communications de serveur, en provoquant l'envoi (240) d'une requête client au composant agissant en contrôleur de communications de serveur, sur l'ordinateur agissant en serveur Web, par utilisation de protocoles Internet.

14. Un jeu de composants selon la revendication 13, dans lequel le composant agissant en contrôleur de communications de serveur est adapté pour générer (130) un formulaire, pour présentation via une interface utilisateur graphique de l'ordinateur client distant, permettant à un utilisateur de spécifier (150) des opérations requises et/ou de l'information requise, devant être incluses dans lesdites requêtes client distantes, et dans lequel le composant agissant en contrôleur de communications de serveur est adapté pour inclure une identification desdites opérations spécifiées et/ou de ladite information dans lesdits messages générés.

15. Un jeu de composants selon la revendication 14, dans lequel le composant décodeur est adapté pour récupérer ladite identification des opérations spécifiées et/ou de l'information spécifiée, à réception desdits messages, et dans lequel le jeu de composants comprend un jeu d'applets (60) pour stockage sur l'ordinateur agissant en serveur Web, de manière qu'elle soient déchargeables sur le premier ordinateur client, en réponse à des requêtes venant dudit premier client, incluant une indentification des opérations spécifiées et/ou de l'information récupérée depuis lesdits messages.

16. Dispositif pour supporter un accès distant à un ordinateur client, comprenant :
un Navigateur Web (20), devant fonctionner sur un premier ordinateur relié à l'Internet ou à un intranet, pour commander le fonctionnement dudit premier ordinateur ;
un composant, agissant en contrôleur de communication de serveur Web devant fonctionner sur un ordinateur agissant en serveur W, comprenant un deuxième ordinateur connecté à l'Internet ou à l'intranet, pour commander le fonctionnement dudit deuxième ordinateur ; et
un composant décodeur (80) pour fonctionnement sur un ordinateur client, pour commander le fonctionnement dudit ordinateur client ;
dans lequel le composant agissant en contrôleur de communications de serveur Web est adapté pour répondre aux requêtes du navigateur Web dirigées sur ledit composant agissant en contrôleur de communications de serveur Web, en générant (160) et en envoyant (170) des messages à l'ordinateur client, lesdits messages identifiant le composant agissant en contrôleur de communications de serveur Web, et dans lequel le composant décodeur est adapté pour répondre auxdits messages venant dudit composant agissant en contrôleur de communications de serveur Web, en provoquant l'envoi (240) d'une requête client au composant agissant en serveur de communications de serveur Web, par utilisation de protocoles Internet, de manière à établir des communications entre ordinateur client et l'ordinateur agissant en serveur Web.

17. Dispositif selon la revendication 16, dans lequel le composant décodeur est installé sur un ordinateur client connecté à des systèmes de commande et/ou d'information électroniques, et est adapté pour communiquer avec l'ordinateur agissant en serveur Web, via une liaison de communication sans fil.

18. Un réseau de communications de données, comprenant :
un premier ordinateur client (40) connecté à un réseau, sur lequel est installé un composant décodeur (80), pour traiter des communications reçues par ledit premier ordinateur client depuis un ordinateur agissant en serveur Web ;
un deuxième ordinateur client (10) connecté à un réseau, sur lequel est installé un composant de communications, pour traiter les communications avec un ordinateur agissant en agissant en serveur Web ;
un ordinateur agissant en serveur Web (30) connecté au réseau, sur lequel est installé un composant agissant en contrôleur de communications de serveur, pour traiter des communications entre ledit ordinateur agissant en serveur Web et lesdits ordinateurs clients ; et
dans lequel le composant agissant en contrôleur de communications de serveur est adapté pour répondre à une requête venant dudit deuxième ordinateur client, dirigée vers ledit composant agissant en contrôleur de communications de serveur, en générant (160) et en envoyant (170) un message au premier ordinateur client, ledit message identifiant le composant agissant en contrôleur de communications de serveur, et dans lequel le composant de décodeur est adapté pour répondre audit message venant dudit composant agissant en contrôleur de communications de serveur, en provoquant l'envoi (240) d'une requête client, par utilisation de protocoles Internet, vers le composant agissant en contrôleur de communications de serveur du serveur Web, de manière à établir des communications entre le premier ordinateur client et l'ordinateur agissant en serveur Web.

19. Un ordinateur agissant en serveur Web (30) pour connexion dans un réseau, l'ordinateur agissant en serveur Web comprenant un composant agissant en contrôleur de communications de serveur, pour recevoir des requêtes de Navigateur Web, pour appel dudit composant agissant en contrôleur de communications de serveur, les requêtes identifiant un ordinateur client spécifique dans le réseau, pour générer (160) un message en réponse auxdites requêtes de Navigateur Web, ledit message incluant une identification dudit composant agissant en contrôleur de communications de serveur et demandant l'établissement de communications avec le composant agissant en contrôleur de communications de serveur, et pour l'envoi (170) dudit message à l'ordinateur client identifié, pour déclencher l'établissement, par ledit ordinateur client identifié, de communications avec le composant agissant en contrôleur de communications de serveur, par utilisation de protocoles Internet.
